# EUROPEAN PATENT APPLICATION

(11) **EP 4 607 772 A1**
(43) Date of publication of application: **27.08.2025**
(21) Application number: 22962669.2
(22) Date of filing: 18.10.2022
(51) Int. Cl.: H02K 5/24

(54) **ROTARY ELECTRIC MACHINE**

(71) Applicant: Mitsubishi Electric Mobility Corporation, Tokyo 100-8310 (JP)
(72) Inventor: MATSUNAGA, Toshihiro, Tokyo 100-8310 (JP); NISHIKAWA, Hideya, Tokyo 100-8310 (JP); ONISHI, Yoshihiko, Tokyo 100-8310 (JP)
(74) Representative: Hoffmann Eitle
(86) International application number: PCT/JP2022/038657
(87) International publication number: WO 2024/084557

(57) **Abstract**

The rotary electric machine is for being attached to a drive target and includes: a motor including a rotating shaft, a rotor fixed to the rotating shaft, and a stator disposed outside the rotor; and a motor case accommodating the motor, wherein the motor case includes a cylindrical portion extending in an axial direction of the rotating shaft and to which the stator is fixed, a bottom portion covering one end portion of the cylindrical portion in the axial direction, and a flange portion protruding from an outer peripheral surface of the bottom portion, the flange portion includes an attachment surface contacting a housing of the drive target and fixed to the housing, and a ratio of a thickness of the bottom portion to a thickness of the flange portion is 1 or more.

## Description

### Technical Field

The present disclosure relates to a rotary electric machine.

### Background Art

A rotary electric machine is attached to a drive target and transmits a driving force generated by a motor of the rotary electric machine to the drive target. Patent Document 1 discloses an electric power steering device that applies a driving force generated by a motor to a steering mechanism of a vehicle as a steering assist force. The electric power steering device includes a gear mechanism as a drive target that transmits the driving force of the motor to the steering mechanism, and a gear housing that accommodates the gear mechanism. A motor case that accommodates the motor is fixed to the gear housing.

### Citation List

### Patent Documents

Patent Document 1: Japanese Patent No. 4926407

### Summary of Invention

### Problem to be Solved by the Invention

In Patent Document 1, in order to limit transmission of vibration of the rotary electric machine to the gear mechanism, a metal plate for vibration damping is provided between the motor case of the rotary electric machine and the gear housing. In this case, the number of components increases, and the man-hours required for assembling the rotary electric machine to the drive target also increases.

The present disclosure has been made in order to solve the above-described problems, and an object of the present disclosure is to provide a rotary electric machine that can suppress an increase in the number of components and limit transmission of vibration of the rotary electric machine to a drive target.

### Means to Solve the Problem

A rotary electric machine according to the present disclosure is a rotary electric machine for being attached to a drive target, including: a motor including a rotating shaft, a rotor fixed to the rotating shaft, and a stator disposed outside the rotor; and a motor case accommodating the motor, wherein the motor case includes a cylindrical portion extending in an axial direction of the rotating shaft and to which the stator is fixed, a bottom portion covering one end portion of the cylindrical portion in the axial direction, and a flange portion protruding from an outer peripheral surface of the bottom portion, the flange portion includes an attachment surface contacting a housing of the drive target and fixed to the housing, and a ratio of a thickness of the bottom portion to a thickness of the flange portion is 1 or more.

### Effects of the Invention

According to the present disclosure, it is possible to provide a rotary electric machine that can suppress an increase in the number of components and limit transmission of vibration of the rotary electric machine to a drive target.

### Brief Description of Drawings

[FIG. 1] A schematic cross-sectional view of a rotary electric machine according to a first embodiment.
[FIG. 2] A graph showing the relationship between a vibration value of a drive target and a perpendicularity index of an attachment surface after a motor case is assembled to a housing of the drive target.
[FIG. 3] A graph showing the relationship between the perpendicularity index of the attachment surface after the motor case is assembled to the housing of the drive target and the ratio of the thickness of a bottom portion to the thickness of a flange portion.
[FIG. 4] A cross-sectional view showing a main part of a rotary electric machine according to a second embodiment.
[FIG. 5] A cross-sectional view showing a main part of a rotary electric machine according to a third embodiment.
[FIG. 6] A view of the main part of the rotary electric machine according to the third embodiment as viewed from below.
[FIG. 7] A view of a main part of a rotary electric machine according to a modification example of the third embodiment as viewed from below.
[FIG. 8] A schematic cross-sectional view of a rotary electric machine according to a fourth embodiment.
[FIG. 9] A graph showing values of a short-pitch winding factor, a distributed winding factor, and a winding factor in permanent magnet synchronous motors with 8 poles and 9 slots, 10 poles and 9 slots, 10 poles and 12 slots, and 14 poles and 12 slots.
[FIG. 10] A schematic cross-sectional view of a rotary electric machine according to a fifth embodiment.
[FIG. 11] A perspective view of an electric power steering device according to a sixth embodiment.
[FIG. 12] A schematic cross-sectional view of a rotary electric machine according to a modification example of the first embodiment.

### Description of Embodiments

Hereinafter, embodiments of the present disclosure will be described with reference to the drawings. The scope of the present disclosure is not limited to the following embodiments and can be arbitrarily changed within the scope of technical ideas of the present disclosure.

### First Embodiment.

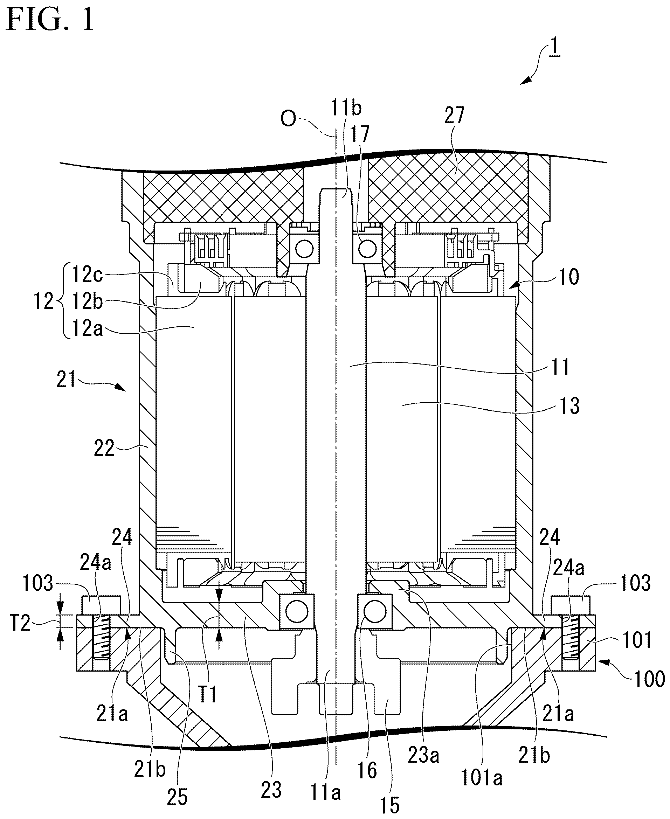

FIG. 1 is a schematic cross-sectional view of a rotary electric machine 1. The rotary electric machine 1 includes a motor 10, a motor case 21, and an upper housing 27. The motor 10 includes a rotating shaft 11, a stator 12, and a rotor 13. The rotary electric machine 1 is attached to a drive target 100 and transmits a driving force generated by the motor 10 of the rotary electric machine 1 to the drive target 100.

In the following description, a direction in which a central axis O of the rotating shaft 11 extends may be referred to as an axial direction. The rotary electric machine 1 and the drive target 100 are arranged in the axial direction. In addition, a side on which the rotary electric machine 1 is located in the axial direction may be referred to as an upper side, and a side on which the drive target 100 is located in the axial direction may be referred to as a lower side or an output side. The viewing in the axial direction may be referred to as a plan view. In a plan view, a direction intersecting the central axis O may be referred to as a radial direction, and a direction that revolves around the central axis O may be referred to as a circumferential direction.

A lower end portion of the rotating shaft 11 is used as an output end 11a. A boss 15 connected to the drive target 100 is attached to the output end 11a. An output of the motor 10 is transmitted to the drive target 100 through the output end 11a. When the rotary electric machine 1 is used, the axial direction of the rotating shaft 11 may not coincide with the vertical direction.

The stator 12 is disposed radially outside the rotor 13 with a gap therebetween. The stator 12 includes a stator iron core 12a, and a coil 12b formed by winding a winding around the stator iron core 12a with an insulator 12c being therebetween. The stator iron core 12a is formed by, for example, stacking a plurality of electrical steel sheets in the axial direction. The outer periphery of the stator iron core 12a is formed in a circular shape. The stator iron core 12a is fixed to the motor case 21.

The rotor 13 is fixed to the rotating shaft 11. The rotor 13 rotates by using a magnetic flux generated from the stator iron core 12a by energizing the coil 12b.

The rotating shaft 11, the stator 12, and the rotor 13 are arranged coaxially.

The motor case 21 accommodates the motor 10. The motor case 21 is fixed to a housing 101 of the drive target 100.

The motor case 21 is made of metal. For example, an aluminum-based alloy is suitable for the specific material of the motor case 21. The motor case 21 is manufactured by, for example, performing cutting processing on a molded body obtained from an aluminum-based alloy by die casting or the like.

The motor case 21 includes a cylindrical portion 22, a bottom portion 23, a plurality of flange portions 24, and a positioning portion 25. The cylindrical portion 22, the bottom portion 23, the flange portions 24, and the positioning portion 25 are integrally formed.

The cylindrical portion 22 extends in the axial direction. The stator iron core 12a of the stator 12 is fixed into the cylindrical portion 22 by press-fitting, shrink-fitting, or the like.

The bottom portion 23 has a disk shape. The bottom portion 23 covers a lower end portion of the cylindrical portion 22. A bearing-fixing portion 23a is provided at a center portion of the bottom portion 23 in a plan view. The bearing-fixing portion 23a is provided to protrude upward from an upper surface of the bottom portion 23. The bearing-fixing portion 23a is provided with a through-hole through which the rotating shaft 11 passes. A first bearing 16 is attached to the through-hole of the bearing-fixing portion 23a.

The flange portion 24 is provided to protrude radially outward from an outer peripheral surface of the bottom portion 23. In the present embodiment, the number of the flange portions 24 is two. The number of the flange portions 24 may be three or more. The flange portion 24A is provided with a bolt hole 24a into which a bolt 103 is inserted.

The positioning portion 25 has a cylindrical shape. The positioning portion 25 is provided to protrude downward from a lower surface of the bottom portion 23. The positioning portion 25 is inserted into an opening 101a provided in an upper portion of the housing 101 of the drive target 100. The motor case 21 is positioned with respect to the housing 101 by the positioning portion 25.

The flange portion 24 and a portion of the bottom portion 23 located outside the positioning portion 25 form an attachment portion 21a of the motor case 21. The attachment portion 21a is attached to the housing 101. The height of a lower surface of the portion of the bottom portion 23 located outside the positioning portion 25 is the same as the height of a lower surface of the flange portion 24. That is, the lower surface of the portion of the bottom portion 23 located outside the positioning portion 25 and the lower surface of the flange portion 24 are flush with each other and form a lower surface of the attachment portion 21a. The lower surface of the attachment portion 21a is referred to as an attachment surface 21b. The attachment surface 21b contacts an upper surface of the housing 101 and is fixed to the housing 101.

As shown in FIG. 1, the thickness of the bottom portion 23 (that is, the length of the bottom portion 23 in the axial direction) is denoted by T1, and the thickness of the flange portion 24 (that is, the length of the flange portion 24 in the axial direction) is denoted by T2. The ratio of the thickness T1 of the bottom portion 23 to the thickness T2 of the flange portion 24 is denoted by R. That is, R = T1/T2. The ratio R of the thickness T1 of the bottom portion 23 to the thickness T2 of the flange portion 24 is 1 or more. The ratio R is more preferably more than 1 and still more preferably 2 or more.

The upper housing 27 has a disk shape. The upper housing 27 is provided to close an opening at an upper end of the cylindrical portion 22. The upper housing 27 is fitted into an upper end portion of the cylindrical portion 22. The center of the upper housing 27 in a plan view is provided with a through-hole through which the rotating shaft 11 passes. A second bearing 17 is attached to the through-hole of the upper housing 27.

The first bearing 16 rotatably supports the output end 11a of the rotating shaft 11. The second bearing 17 rotatably supports an end portion 11b (an upper end in the present embodiment) of the rotating shaft 11 opposite to the output end 11a. Therefore, the rotor 13 fixed to the rotating shaft 11 is also rotatable at a position radially inside the stator 12.

The assembly of the motor case 21 to the housing 101 will be described. The positioning portion 25 is inserted into the opening 101a of the housing 101, and the attachment surface 21b is brought into contact with the upper surface of the housing 101. In this state, the motor case 21 is attached to the housing 101 by inserting the bolt 103 into the bolt hole 24a of the flange portion 24 and fastening the bolt 103 to the housing 101.

Here, the flange portion 24 may be deformed and the attachment surface 21b may be curved due to a manufacturing error of the motor case 21, deformation of the motor case 21 during manufacturing of the rotary electric machine 1, and the like. For example, when the stator iron core 12a is fixed into the cylindrical portion 22 by press-fitting or shrink-fitting, the cylindrical portion 22 may be deformed to bulge radially outward due to a load applied to the cylindrical portion 22. When the flange portion 24 is deformed to bend downward toward a radially outer side as the cylindrical portion 22 is deformed, the attachment surface 21b is also curved to bend downward toward the radially outer side. When the attachment surface 21b is curved, the contact area between the attachment surface 21b and the upper surface of the housing 101 decreases, and a gap is made between the attachment surface 21b and the upper surface of the housing 101. As a result, there is a possibility that vibration transmitted from the rotary electric machine 1 to the drive target 100 increases.

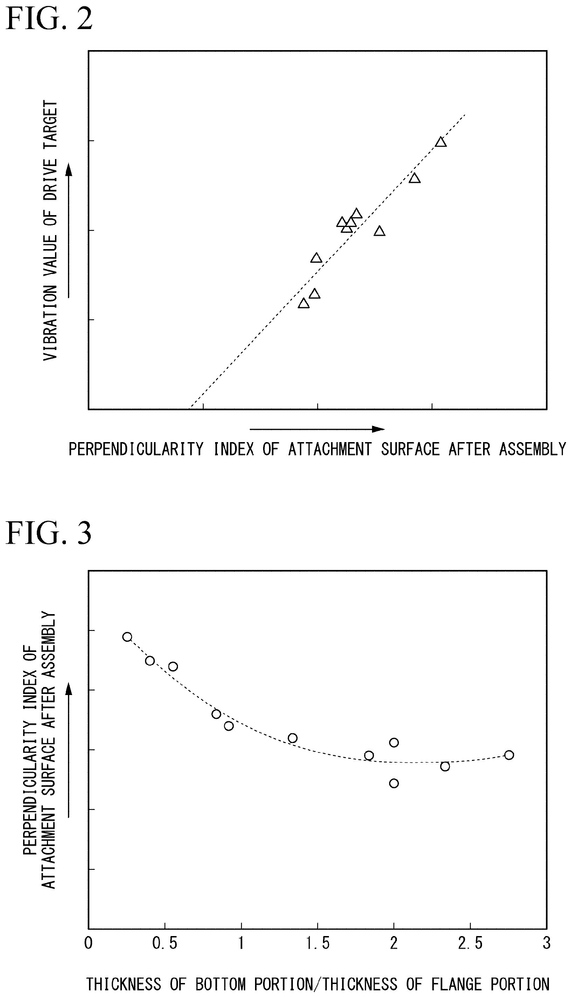

By setting the ratio R of the thickness T1 of the bottom portion 23 to the thickness T2 of the flange portion 24 to 1 or more, it is possible to limit the transmission of the vibration of the rotary electric machine 1 to the drive target 100. The reason for this will be described with reference to FIGS. 2 and 3.

FIG. 2 is a graph showing the relationship between a vibration value of the drive target 100 measured by actual measurement and a perpendicularity index (hereinafter, also referred to as a perpendicularity index of the attachment surface 21b after assembly) of the attachment surface 21b after the motor case 21 is assembled to the housing 101 of the drive target 100, and the perpendicularity index is calculated by CAE analysis. The vertical axis represents the vibration value of the drive target 100. The higher vibration value of the drive target 100 indicates the greater vibration transmitted from the rotary electric machine 1 to the drive target 100. The horizontal axis represents the perpendicularity index of the attachment surface 21b after assembly. The perpendicularity index of the attachment surface 21b after assembly is a value that represents a degree of curvature of the attachment surface 21b after the motor case 21 is assembled to the housing 101, based on a virtual plane perpendicular to the axial direction. More specifically, the perpendicularity index of the attachment surface 21b after assembly is a value that represents a magnitude of a deviation of the attachment surface 21b with respect to the virtual plane. The greater the perpendicularity index of the attachment surface 21b after assembly is, the more the attachment surface 21b after assembly is curved downward toward the radially outer side with respect to the virtual plane.

As shown in FIG. 2, as the perpendicularity index of the attachment surface 21b after assembly decreases, the vibration value of the drive target 100 also decreases. That is, it can be seen that the transmission of the vibration of the rotary electric machine 1 to the drive target 100 can be limited by decreasing the perpendicularity index of the attachment surface 21b after assembly. When the perpendicularity index of the attachment surface 21b after assembly is small, the attachment surface 21b has a shape along the virtual plane perpendicular to the axial direction. Accordingly, it is considered that the contact area between the attachment surface 21b and the upper surface of the housing 101 can be increased, and as a result, the transmission of the vibration of the rotary electric machine 1 to the drive target 100 can be limited.

FIG. 3 is a graph showing the relationship between the perpendicularity index of the attachment surface 21b after assembly and the ratio R of the thickness T1 of the bottom portion 23 to the thickness T2 of the flange portion 24. The vertical axis represents the perpendicularity index of the attachment surface 21b after assembly. The horizontal axis represents the ratio R of the thickness T1 of the bottom portion 23 to the thickness T2 of the flange portion 24.

As shown in FIG. 3, when the ratio R of the thickness T1 of the bottom portion 23 to the thickness T2 of the flange portion 24 is 1 or more, the effect of reducing the perpendicularity index of the attachment surface 21b after assembly is increased. When the ratio R is 1 or more, the thickness T1 of the bottom portion 23 increases or the thickness T2 of the flange portion 24 decreases, compared to a case where the ratio R is less than 1. As the thickness T1 of the bottom portion 23 increases, the rigidity of the bottom portion 23 improves. By improving the rigidity of the bottom portion 23, it is possible to limit the deformation of the flange portion 24 when the stator iron core 12a is fixed into the cylindrical portion 22 by press-fitting or shrink-fitting. Therefore, it is considered that the curvature of the attachment surface 21b can be limited in an early stage of assembly, and as a result, the perpendicularity index of the attachment surface 21b after assembly can be reduced. In addition, as the thickness T2 of the flange portion 24 decreases, the rigidity of the flange portion 24 reduces. By the rigidity of the flange portion 24 reducing, even when the flange portion 24 has been deformed before assembly, the flange portion 24 can be deformed to be along the upper surface of the housing 101 with a fastening force obtained by fastening the bolt 103 to the housing 101. Therefore, it is considered that the curvature of the attachment surface 21b can be corrected, and the perpendicularity index of the attachment surface 21b after assembly can be reduced.

As a result, in a case where the ratio R of the thickness T1 of the bottom portion 23 to the thickness T2 of the flange portion 24 is 1 or more, the effect of reducing the perpendicularity index of the attachment surface 21b after assembly is increased, and therefore, the transmission of the vibration of the rotary electric machine 1 to the drive target 100 can be limited. In addition, in a case where the ratio R is more than 1, the effect of reducing the perpendicularity index of the attachment surface 21b after assembly becomes greater, and therefore, the transmission of the vibration of the rotary electric machine 1 to the drive target 100 can be effectively limited. In a case where the ratio R is 2 or more, the effect of reducing the perpendicularity index of the attachment surface 21b after assembly is further increased, and therefore, the transmission of the vibration of the rotary electric machine 1 to the drive target 100 can be more effectively limited.

As described above, the rotary electric machine 1 according to the present embodiment includes the motor 10 including the rotating shaft 11, the rotor 13 fixed to the rotating shaft 11, and the stator 12 disposed outside the rotor 13, and the motor case 21 accommodating the motor 10. The motor case 21 includes the cylindrical portion 22 extendinf in the axial direction and to which the stator 12 is fixed, the bottom portion 23 covering one end portion of the cylindrical portion 22 in the axial direction, and the flange portion 24 protruding from the outer peripheral surface of the bottom portion 23. The flange portion 24 includes the attachment surface 21b contacting the housing 101 of the drive target 100 and fixed to the housing 101. The ratio R of the thickness T1 of the bottom portion 23 to the thickness T2 of the flange portion 24 is 1 or more.

In the rotary electric machine 1 described above, by setting the ratio R to 1 or more, it is possible to limit the transmission of the vibration of the rotary electric machine 1 to the drive target 100. Specifically, in a case where the ratio R is 1 or more, the thickness T2 of the flange portion 24 decreases or the thickness T1 of the bottom portion 23 increases, compared to a case where the ratio R is less than 1. As the thickness T1 of the bottom portion 23 increases, the rigidity of the bottom portion 23 improves. By improving the rigidity of the bottom portion 23, the deformation of the flange portion 24 can be limited during the manufacturing of the rotary electric machine 1 or the like. In addition, as the thickness T2 of the flange portion 24 decreases, the rigidity of the flange portion 24 reduces. By reducing the rigidity of the flange portion 24, even when the flange portion 24 has been deformed in the motor case 21 before being fixed to the housing 101, the flange portion 24 can be deformed to be along the housing 101 when the flange portion 24 is fixed to the housing 101. Accordingly, the curvature of the attachment surface 21b can be corrected. As a result, by setting the ratio R to 1 or more, the degree of curvature of the attachment surface 21b after the motor case 21 is assembled to the housing 101 can be reduced, and the contact area between the attachment surface 21b and the housing 101 can be increased. Therefore, it is possible to limit the transmission of the vibration of the rotary electric machine 1 to the drive target 100.

In addition, the attachment surface 21b is in contact with the housing 101. That is, it is possible to limit the transmission of the vibration of the rotary electric machine 1 to the drive target 100 without providing a damping member or the like between the motor case 21 and the housing 101. Therefore, it is possible to suppress an increase in the number of components and an increase in the man-hours required for assembling the rotary electric machine 1 to the drive target 100.

As a result, it is possible to suppress an increase in the number of components and limit the transmission of the vibration of the rotary electric machine 1 to the drive target 100.

In addition, the cylindrical portion 22, the bottom portion 23, and the flange portion 24 are integrally formed.

As a result, the manufacturing of the rotary electric machine 1 is facilitated.

In addition, the stator 12 is fixed to the cylindrical portion 22 by press-fitting or shrink-fitting.

As a result, the stator 12 can be firmly fixed to the cylindrical portion 22.

When the stator 12 is fixed in the cylindrical portion 22 by press-fitting or baking, a load is applied to the cylindrical portion 22, so the cylindrical portion 22 may be deformed. Even in such a case, by setting the ratio R to the above value, it is possible to limit the deformation of the flange portion 24, and it is possible to reduce the degree of curvature of the attachment surface 21b after the motor case 21 is assembled to the housing 101. Therefore, it is possible to limit the transmission of the vibration of the rotary electric machine 1 to the drive target 100.

### Second Embodiment.

Next, the rotary electric machine 1 according to a second embodiment will be described. Since the basic configuration of the rotary electric machine 1 according to the present embodiment is the same as that of the first embodiment, descriptions will focus on differences.

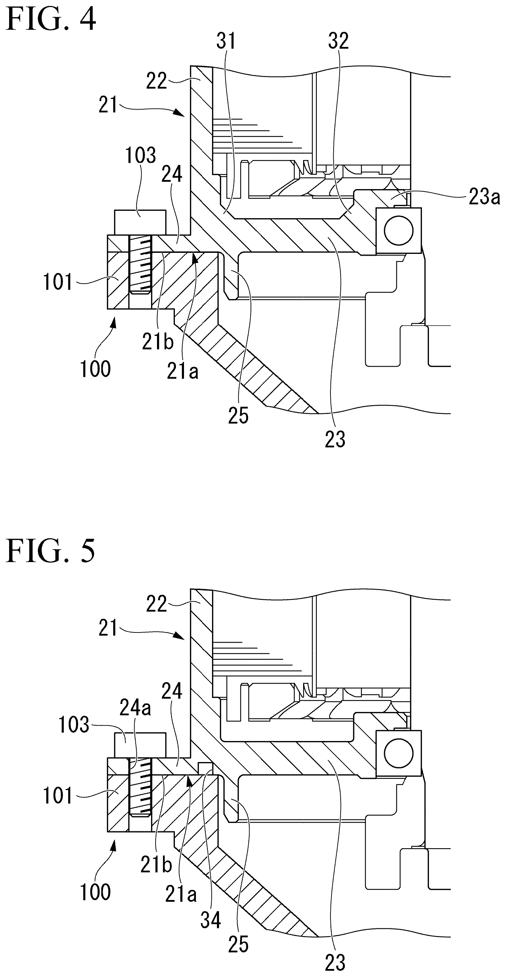

FIG. 4 is a cross-sectional view showing a main part of the rotary electric machine 1 according to the second embodiment. As shown in FIG. 4, in the present embodiment, a first reinforcing portion 31 (reinforcing portion) is formed at a corner portion where the bottom portion 23 and the cylindrical portion 22 intersect with each other, and a second reinforcing portion 32 is formed at a corner portion where the bottom portion 23 and the bearing-fixing portion 23a intersect with each other. The first reinforcing portion 31 and the second reinforcing portion 32 improve the rigidity of the bottom portion 23.

The first reinforcing portion 31 is a connecting portion that connects the upper surface of the bottom portion 23 and an inner peripheral surface of the cylindrical portion 22. In a cross-sectional view along the central axis O, the first reinforcing portion 31 has a linear shape that extends radially inward toward a lower side. An inner surface of the first reinforcing portion 31 may have a concave curved shape.

The second reinforcing portion 32 is a connecting portion that connects the upper surface of the bottom portion 23 and a side surface of the bearing-fixing portion 23a in the radial direction. In a cross-sectional view along the central axis O, the second reinforcing portion 32 has a linear shape that extends radially outward toward a lower side. An inner surface of the second reinforcing portion 32 may have a concave curved shape.

As described above, in the rotary electric machine 1 according to the present embodiment, the first reinforcing portion 31 is formed at the corner portion where the bottom portion 23 and the cylindrical portion 22 intersect with each other.

Accordingly, the rigidity of the bottom portion 23 can be improved, and the deformation of the flange portion 24 can be more effectively limited during the manufacturing of the rotary electric machine 1 or the like. Therefore, the degree of curvature of the attachment surface 21b after the motor case 21 is assembled to the housing 101 can be reduced, and the transmission of the vibration of the rotary electric machine 1 to the drive target 100 can be more effectively limited.

### Third Embodiment.

Next, the rotary electric machine 1 according to a third embodiment will be described. Since the basic configuration of the rotary electric machine 1 according to the present embodiment is the same as that of the first embodiment, descriptions will focus on differences.

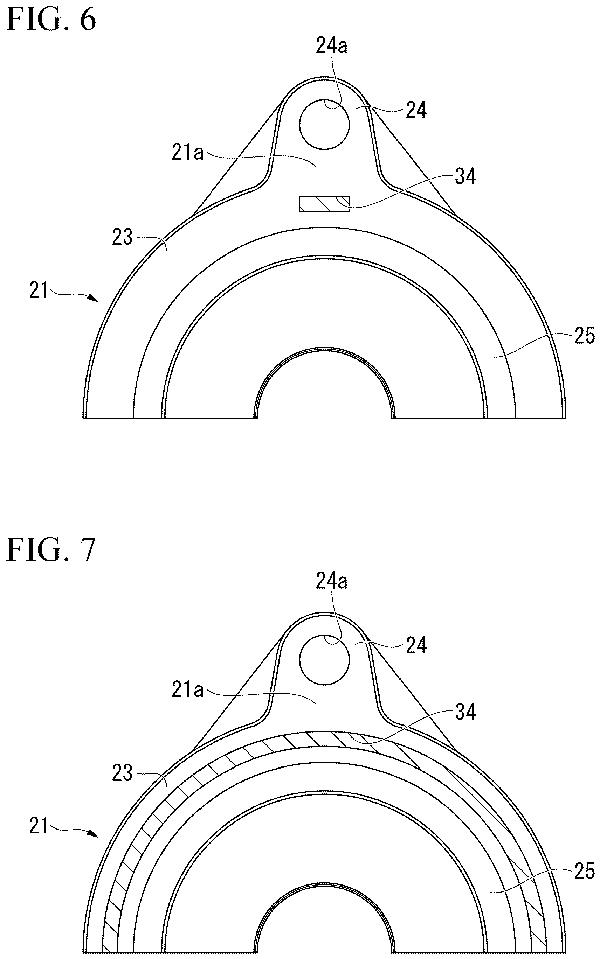

FIG. 5 is a cross-sectional view showing a main part of the rotary electric machine 1 according to the third embodiment. FIG. 6 is a view of the main part of the rotary electric machine 1 according to the third embodiment as viewed from below. As shown in FIGS. 5 and 6, in the present embodiment, the attachment portion 21a is provided with a groove portion 34. The groove portion 34 is disposed between the bolt hole 24a of the flange portion 24 and the positioning portion 25. The groove portion 34 is recessed upward from the attachment surface 21b. That is, the groove portion 34 opens toward the housing 101. The groove portion 34 is disposed at a position overlapping the flange portion 24 in the radial direction. Providing the groove portion 34 can make the rigidity of the attachment portion 21a be reduced and makes the flange portion 24 be easily deformed to be along the housing 101 when the flange portion 24 is fixed to the housing 101.

As described above, in the rotary electric machine 1 according to the present embodiment, the groove portion 34 that opens toward the housing 101 is formed in a portion of the motor case 21 between the positioning portion 25 and the bolt hole 24a. Accordingly, the flange portion 24 is made to be easily deformed to be along the housing 101 when the flange portion 24 is fixed to the housing 101, and the curvature of the attachment surface 21b can be more effectively corrected. Therefore, the degree of curvature of the attachment surface 21b after the motor case 21 is assembled to the housing 101 can be reduced, and the transmission of the vibration of the rotary electric machine 1 to the drive target 100 can be more effectively limited.

### Modification Example of Third Embodiment.

FIG. 7 is a view of a main part of the rotary electric machine 1 according to a modification example of the third embodiment as viewed from below. As shown in FIG. 7, the groove portion 34 may be provided in the motor case 21 on the entire circumference thereof in the circumferential direction. In this case, the flange portion 24 is made to be more easily deformed to be along the housing 101 when the flange portion 24 is fixed to the housing 101. Therefore, the transmission of the vibration of the rotary electric machine 1 to the drive target 100 can be more effectively limited.

### Fourth Embodiment.

Next, a rotary electric machine 1A according to a fourth embodiment will be described. Since the basic configuration of the rotary electric machine 1A according to the present embodiment is the same as that of the first embodiment, descriptions will focus on differences.

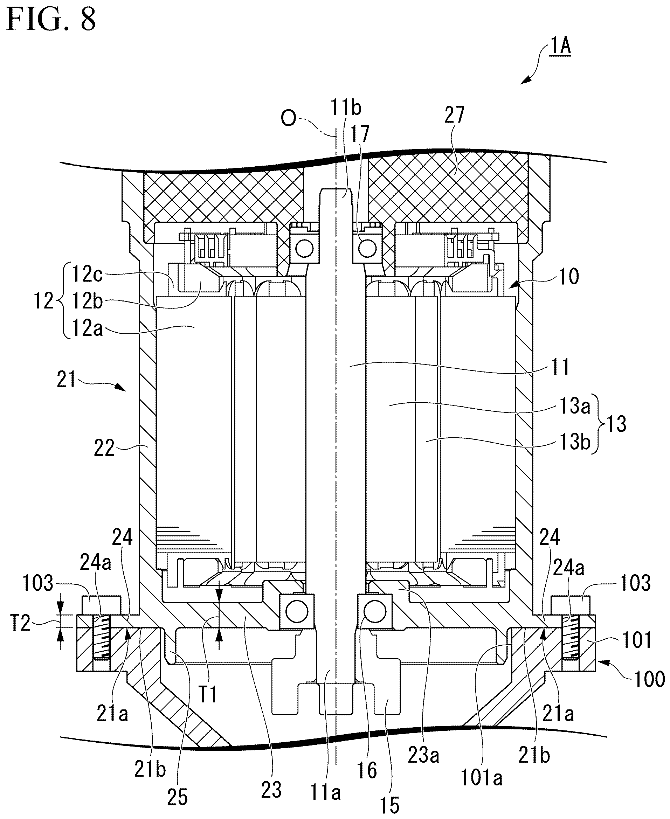

FIG. 8 is a schematic cross-sectional view of the rotary electric machine 1A according to the fourth embodiment. In the present embodiment, the motor 10 of the rotary electric machine 1A is a permanent magnet synchronous motor. That is, in the present embodiment, the rotor 13 includes a rotor iron core 13a and a plurality of permanent magnets 13b. The rotor iron core 13a has a cylindrical shape. The rotor iron core 13a is provided around the rotating shaft 11 and is fixed to the rotating shaft 11. The plurality of permanent magnets 13b are provided on an outer peripheral surface of the rotor iron core 13a. The plurality of permanent magnets 13b are disposed such that polarities (S-pole and N-pole) on the outer peripheral surface of the rotor 13 alternate in the circumferential direction.

In addition, the stator iron core 12a of the stator 12 includes a core back formed in an annular shape and a plurality of teeth protruding radially inward from the core back. The plurality of coils 12b are formed by winding a winding around each of the plurality of teeth in a concentrated winding manner. The plurality of coils 12b may be formed by winding a winding around the plurality of teeth in a distributed winding manner.

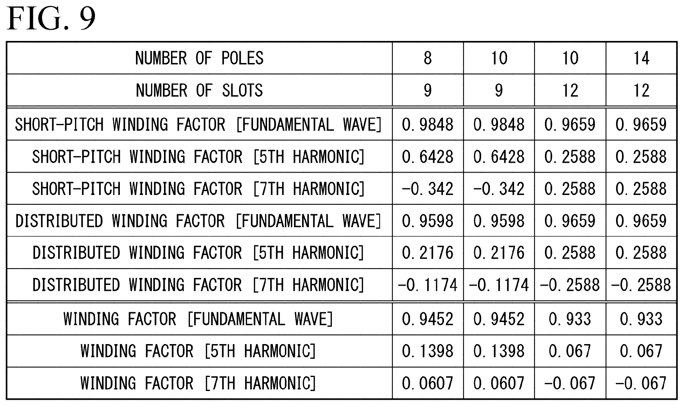

FIG. 9 is a graph showing values of a short-pitch winding factor, a distributed winding factor, and a winding factor in permanent magnet synchronous motors with 8 poles and 9 slots, 10 poles and 9 slots, 10 poles and 12 slots, and 14 poles and 12 slots. Here, the permanent magnet synchronous motor with 8 poles and 9 slots is a permanent magnet synchronous motor in which the number of poles of the permanent magnets 13b is 8 and the number of teeth of the stator iron core 12a is 9. In addition, a permanent magnet synchronous motor in which the number of poles of the permanent magnet 13b and the number of teeth of the stator iron core 12a are set to integer multiples of the number of poles and the number of teeth of the 8 poles and 9 slots is referred to as a permanent magnet synchronous motor of an 8-pole 9-slot series. The winding factor of the permanent magnet synchronous motor of the 8-pole 9-slot series is the same value as the winding factor of the permanent magnet synchronous motor with 8 poles and 9 slots. The same as the 8 poles and 9 slots applies to the 10 poles and 9 slots, the 10 poles and 12 slots, and the 14 poles and 12 slots.

As shown in FIG. 9, in a case where the motor 10 of the rotary electric machine 1A is the permanent magnet synchronous motor of the 8-pole 9-slot series, the 10-pole 9-slot series, the 10-pole 12-slot series, or the 14-pole 12-slot series, the winding factor with respect to the fundamental wave is high, and an output torque of the rotary electric machine 1A can be increased. Therefore, it is possible to provide the rotary electric machine 1A having high performance at a low cost.

On the other hand, in this case, since an electromagnetic force that deforms the rotor iron core 13a into an ellipse is generated, there is a possibility that the vibration of the rotary electric machine 1A increases. However, even in such a case, by setting the ratio R to the above value, it is possible to limit the transmission of the vibration of the rotary electric machine 1A to the drive target 100.

### Fifth Embodiment.

Next, a rotary electric machine 1B according to a fifth embodiment will be described. Since the basic configuration of the rotary electric machine 1B according to the present embodiment is the same as that of the fourth embodiment, descriptions will focus on differences.

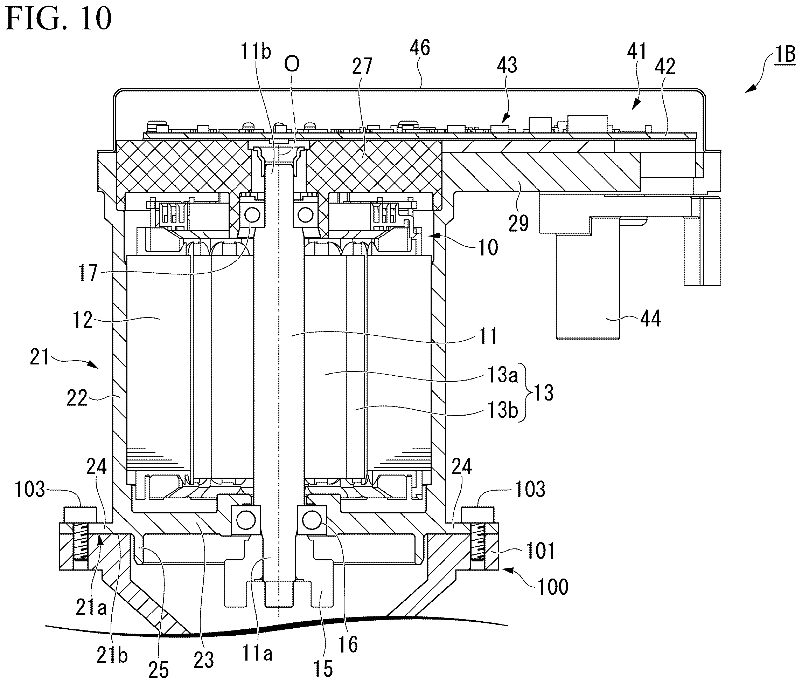

FIG. 10 is a schematic cross-sectional view of the rotary electric machine 1B according to the fifth embodiment. As shown in FIG. 10, in the present embodiment, the rotary electric machine 1B further includes a control device 41 and a connector 44. In addition, as in the fourth embodiment, the motor 10 of the rotary electric machine 1B is a permanent magnet synchronous motor.

The control device 41 is disposed above the motor 10. That is, the control device 41 is disposed on an opposite side of the motor 10 from the bottom portion 23 in the axial direction. The control device 41 includes a circuit board 42 and an electronic circuit 43 provided on the circuit board 42. The circuit board 42 is, for example, a multilayer printed board in which a plurality of insulating layers and a plurality of conductor layers are stacked. The electronic circuit 43 includes an inverter circuit that drives the motor 10, a control circuit that controls the inverter circuit, and the like. Electronic components such as a power semiconductor element that forms the inverter circuit and a CPU that performs arithmetic processing are mounted on the circuit board 42. The electronic circuit 43 is configured of these electronic components and a circuit pattern formed on the circuit board 42. The circuit board 42 is covered from above by a cover 46.

In addition, in the present embodiment, the motor case 21 further includes a protruding portion 29 that protrudes radially outward from the upper end portion of the cylindrical portion 22. The circuit board 42 is supported by the upper housing 27 and the protruding portion 29. The circuit board 42 is fixed to the upper housing 27 and the protruding portion 29 by screws (not shown).

The connector 44 is provided on a lower surface of the protruding portion 29. The connector 44 is used to connect the rotary electric machine 1 to an external power supply, an external sensor, and the like. The connector 44 is electrically connected to the electronic circuit 43. Power of the external power supply and a signal of the external sensor are transmitted to the electronic circuit 43 through the connector 44.

As described above, the rotary electric machine 1B according to the present embodiment further includes the control device 41 that controls the motor 10. The control device 41 is disposed on the opposite side of the motor 10 from the bottom portion 23 in the axial direction.

As a result, in the rotary electric machine 1B, the motor 10 and the control device 41 can be integrally provided. In addition, since the control device 41 is disposed on the opposite side of the motor 10 from the bottom portion 23 in the axial direction, the transmission of the vibration of the motor 10 to the control device 41 can be limited compared to a case where the control device 41 is disposed on the bottom portion 23 side (that is, the output side of the motor 10).

### Sixth Embodiment.

The rotary electric machines 1, 1A, and 1B according to the above-described embodiments are suitably used in an electric power steering device mounted on a vehicle. As a sixth embodiment, an electric power steering device 200 including the rotary electric machine 1 will be described.

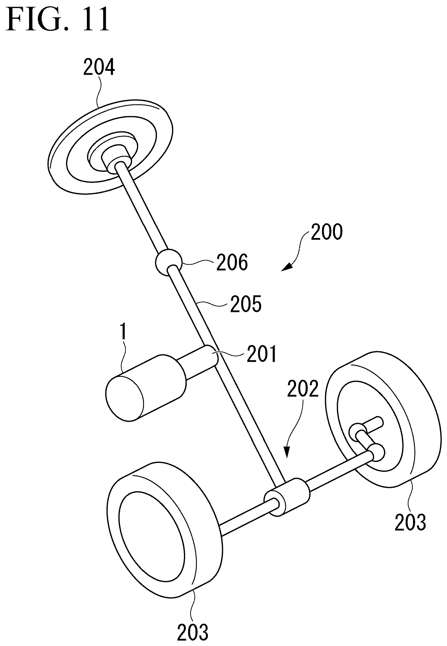

FIG. 11 is a perspective view of the electric power steering device 200 according to the sixth embodiment. As shown in FIG. 11, the electric power steering device 200 according to the present embodiment includes the rotary electric machine 1, a gear mechanism 201, a steering mechanism 202, wheels 203, a steering wheel 204, a steering shaft 205, and a torque sensor 206.

The motor 10 of the rotary electric machine 1 is used as an auxiliary motor that transmits a driving force generated from the motor 10 to the steering mechanism 202 as a steering assist force.

The gear mechanism 201 connects the rotating shaft 11 of the rotary electric machine 1 to the steering shaft 205. The gear mechanism 201 transmits the driving force generated by the motor 10 to the steering mechanism 202 of the vehicle. The gear mechanism 201 corresponds to the drive target 100 in the above-described embodiments.

The steering wheel 204 is operated by a driver who drives the vehicle and can be rotated to the left or to the right.

The steering shaft 205 is connected to the steering wheel 204. The steering shaft 205 transmits a steering torque from the steering wheel 204 to the steering mechanism 202 connected to the wheels 203.

The torque sensor 206 is attached to the steering shaft 205. The torque sensor 206 detects the steering torque from the steering wheel 204.

When the vibration of the rotary electric machine 1 is transmitted to the gear mechanism 201 as the drive target 100 and thus the gear mechanism 201 vibrates, an abnormal sound is generated. However, by using the rotary electric machine 1 according to the above-described embodiments, it is possible to limit the transmission of the vibration of the rotary electric machine 1 to the gear mechanism 201, and thus it is possible to limit the generation of the vibration of the gear mechanism 201 and the abnormal sound.

The embodiments can be combined, and each embodiment can be modified or omitted as appropriate.

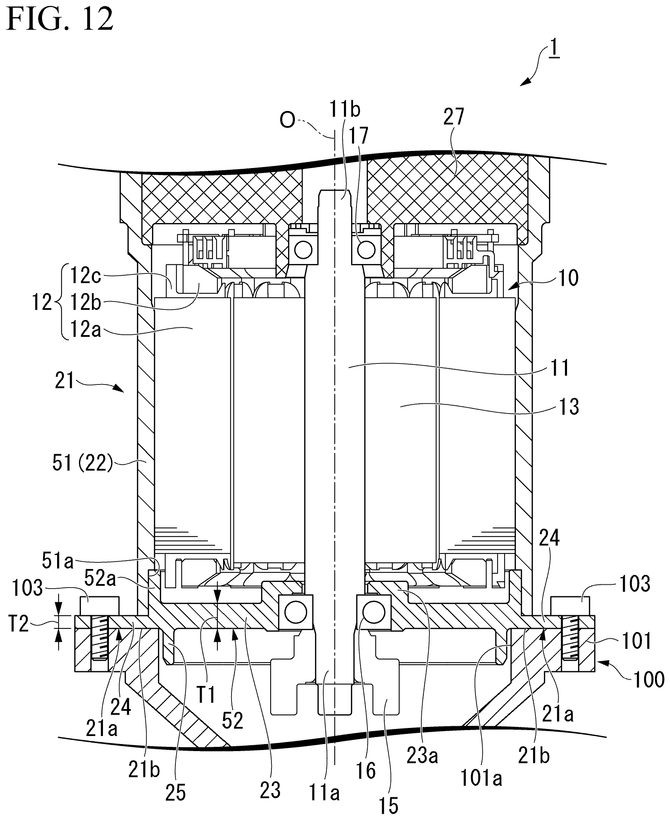

FIG. 12 is a schematic cross-sectional view of the rotary electric machine 1 according to a modification example of the first embodiment. As shown in FIG. 12, the motor case 21 may include a first frame portion 51 that forms the cylindrical portion 22 and a second frame portion 52 that forms the bottom portion 23, the plurality of flange portions 24, and the positioning portion 25. That is, the cylindrical portion 22, and the bottom portion 23, the plurality of flange portions 24, and the positioning portion 25 may be formed of separate members. The first frame portion 51A is provided with a fitting recess portion 51a. The fitting recess portion 51a is formed on an inner peripheral surface of the lower end portion of the cylindrical portion 22. The second frame portion 52 is provided with a fitting protrusion portion 52a. The fitting protrusion portion 52a is formed to protrude upward from an upper surface of an outer peripheral portion of the bottom portion 23. The first frame portion 51 and the second frame portion 52 are assembled by fitting the fitting protrusion portion 52a into the fitting recess portion 51a, thereby forming the motor case 21. In order to firmly fix the first frame portion 51 and the second frame portion 52, it is preferable that the fitting protrusion portion 52a be press-fitted into the fitting recess portion 51a. The first frame portion 51 and the second frame portion 52 may be fixed by screwing.

For the electric power steering device 200 according to the sixth embodiment, any of the rotary electric machine 1 according to the first to third embodiments, the rotary electric machine 1A according to the fourth embodiment, and the rotary electric machine 1B according to the fifth embodiment may be used.

### Reference Signs List

1, 1A, 1B Rotary electric machine
10 Motor
11 Rotating shaft
12 Stator
13 Rotor
13a Rotor iron core
13b Permanent magnet
21 Motor case
21a Attachment portion
21b Attachment surface
22 Cylindrical portion
23 Bottom portion
24 Flange portion
24a Bolt hole
25 Positioning portion
31 First reinforcing portion (reinforcing portion)
34 Groove portion
41 Control device
44 Connector
100 Drive target
200 Electric power steering device

## Claims

1. A rotary electric machine for being attached to a drive target, comprising:
a motor including a rotating shaft, a rotor fixed to the rotating shaft, and a stator disposed outside the rotor; and
a motor case accommodating the motor,
wherein the motor case includes
a cylindrical portion extending in an axial direction of the rotating shaft and to which the stator is fixed,
a bottom portion covering one end portion of the cylindrical portion in the axial direction, and
a flange portion protruding from an outer peripheral surface of the bottom portion,
the flange portion includes an attachment surface contacting a housing of the drive target and fixed to the housing, and
a ratio of a thickness of the bottom portion to a thickness of the flange portion is 1 or more.

2. The rotary electric machine according to claim 1,
wherein the cylindrical portion, the bottom portion, and the flange portion are integrally formed.

3. The rotary electric machine according to claim 1 or 2,
wherein the stator is fixed to the cylindrical portion by press-fitting or shrink-fitting.

4. The rotary electric machine according to any one of claims 1 to 3,
wherein a reinforcing portion is formed at a corner portion where the bottom portion and the cylindrical portion intersect with each other.

5. The rotary electric machine according to any one of claims 1 to 4,
wherein the motor case further includes a positioning portion protruding from the bottom portion toward one side in the axial direction and configured to be inserted into an opening provided in the housing of the drive target,
the flange portion includes a bolt hole into which a bolt to be fastened to the housing is inserted, and
a groove portion opening toward the housing is formed in a portion of the motor case between the positioning portion and the bolt hole.

6. The rotary electric machine according to claim 5,
wherein the groove portion is provided on an entire circumference of the motor case in a circumferential direction of the rotating shaft.

7. The rotary electric machine according to any one of claims 1 to 6,
wherein the motor is a permanent magnet synchronous motor in which the rotor includes a rotor iron core fixed to the rotating shaft and a plurality of permanent magnets provided on an outer peripheral surface of the rotor iron core.

8. The rotary electric machine according to claim 7,
wherein the motor is a permanent magnet synchronous motor of an 8-pole 9-slot series, a 10-pole 9-slot series, a 10-pole 12-slot series, or a 14-pole 12-slot series.

9. The rotary electric machine according to any one of claims 1 to 8, further comprising:
a control device configured to control the motor,
wherein the control device is disposed on an opposite side of the motor from the bottom portion in the axial direction.

10. The rotary electric machine according to any one of claims 1 to 9,
wherein the motor is used as an auxiliary motor of an electric power steering device.
